# EUROPEAN PATENT SPECIFICATION

(11) **EP 3 862 999 B1**
(45) Date of publication and mention of the grant of the patent: **10.12.2025**
(21) Application number: 21152204.0
(22) Date of filing: 18.01.2021
(51) Int. Cl.: G08G 5/21, G08G 5/51, G08G 5/26, G08G 5/54, G08G 5/80, G08G 5/72

(54) **RUNWAY DETERMINATION BASED ON A CLEARANCE RECEIVED FROM TRAFFIC CONTROL SYSTEM**
LANDEBAHNBESTIMMUNG BASIEREND AUF EINER VOM FLUGVERKEHRSLEITSYSTEM EMPFANGENEN FREIGABE
DÉTERMINATION DE PISTE BASÉE SUR UNE ARRIVÉE REÇUE À PARTIR D'UN SYSTÈME DE CONTRÔLE DE TRAFIC

(30) Priority: 04.02.2020 US 202016781901
(43) Date of publication of application: 11.08.2021
(73) Proprietor: Honeywell International Inc., Charlotte, NC 28202 (US)
(72) Inventor: ZHENG, Jinghua, Charlotte, NC 28202 (US); CHEN, Haiping, Charlotte, NC 28202 (US)
(74) Representative: Haseltine Lake Kempner LLP

(56) References cited:
- US-A1- 2008 109 163
- US-A1- 2009 115 637

## Description

### TECHNICAL FIELD

This disclosure relates to collision awareness for vehicles.

### BACKGROUND

During departure procedures, an airplane leaves the gate and proceeds to an assigned runway for takeoff. As the airplane taxis from the gate to the assigned runway, the airplane may have to cross a second runway. The airplane may have a collision awareness system that receives location data from other vehicles to predict whether a collision will occur on the assigned runway or the second runway. The collision awareness system can use the position, track angle, and vertical speed of the ownship and other vehicles, along with an airport map, to predict a potential collision.
Document US 2008/0109163 discloses a system and method for providing aircraft runway guidance. One delineated runway alert system for a host aircraft comprises: a processor for executing one or more instructions that implement one or more functions of the runway alert system; a data storage device including geographical runway information; a receiver for obtaining current location data of the host aircraft; an apparatus to provide a current heading of the host aircraft; a data entry device for receiving data indicating a desired runway; memory for storing the one or more instructions for execution by the processor to implement the one or more functions of the runway alert system to: receive the identity of the desired runway; provide an indicia of: the desired runway; and the position of the host aircraft in relation to the desired runway.

### SUMMARY

The present invention comprises a system and method as set out in appended independent claims 1 and 11, respectively. Preferred embodiments of the invention are defined according to dependent claims 2-10. In general, this disclosure describes systems, devices, and techniques for determining whether a vehicle is active on a runway. A system according to the invention includes processing circuitry configured to determine that the vehicle is active on a first runway based on a state vector of the vehicle and an airport runway database. The processing circuitry is also configured to determine that the vehicle is active on a second runway based on a clearance received by the vehicle from a traffic control system and a response to the received clearance transmitted from the vehicle, by processing the data in clearance and the response. In response to determining that the first runway matches the second runway, the processing circuitry is configured to present an indication that the vehicle is active on the first runway. In response to determining that the first runway is different than the second runway; and the vehicle is active on the second runway, the processing circuitry is configured to present, via the display, an indication that the vehicle is active on the second runway. By using the clearance, the processing circuitry can ensure that the runway on which the vehicle is active is a clear runway without any obstructions.

In some examples, a system includes a memory configured to store a database comprising a map of a plurality of runways in an aerodrome and a receiver configured to receive a clearance for a vehicle from a traffic control system. The system also includes processing circuitry determine that the vehicle is active on a first runway of the plurality of runways based on a state vector for the vehicle and based on the map of the plurality of runways. The processing circuitry is also configured to determine that the vehicle is active on a second runway of the plurality of runways based on the received clearance. The processing circuitry is further configured to confirm whether the first runway matches the second runway and present, via a display, an indication that the vehicle is active on the first runway in response to confirming that the first runway matches the second runway. The processing circuitry is also confirm to determine that the first runway is different than the second runway; and present, via the display, an indication that the vehicle is active on the second runway in response to: determining that the first runway is different than the second runway; and determining that the vehicle is active on the second runway based on the received clearance.

According to the invention, a method includes determining, by processing circuitry, that a vehicle is active on a first runway of a plurality of runways based on a state vector for the vehicle and a map of the plurality of runways. The method also includes receiving a clearance for the vehicle from a traffic control system; receiving a response to the clearance transmitted from the vehicle to the traffic control system; and determining, by the processing circuitry, that the vehicle is active on a second runway of the plurality of runways based on the clearance for the vehicle received from a traffic control system and the response. The method further includes confirming, by the processing circuitry, that the first runway matches the second runway. The method includes presenting, by the processing circuitry and via a display, an indication that the vehicle is active on the first runway in response to confirming that the first runway matches the second runway. The method includes presenting, via the display, an indication that the vehicle is active on the second runway in response to: determining that the first runway is different than the second runway; and determining that the vehicle is active on the second runway.

In some examples, a device includes a computer-readable medium having executable instructions stored thereon, configured to be executable by processing circuitry for causing the processing circuitry to store a database comprising a map of a plurality of runways in an aerodrome in a memory. The instructions also cause the processing circuitry to determine that a vehicle is active on a first runway of a plurality of runways based on a state vector for the vehicle and a map of the plurality of runways. The instructions further cause the processing circuitry to determine that the vehicle is active on a second runway of the plurality of runways based on a clearance for the vehicle received from a traffic control system. The instructions cause the processing circuitry to confirm that the first runway matches the second runway and present, and via a display, an indication that the vehicle is active on the first runway in response to confirming that the first runway matches the second runway.

The details of one or more examples of the disclosure are set forth in the accompanying drawings and the description below. Other features, objects, and advantages will be apparent from the description, drawings, and claims.

### BRIEF DESCRIPTION OF THE DRAWINGS

FIG. 1 is a conceptual block diagram of vehicles active on two runways, in accordance with some examples of this disclosure.
FIG. 2 is a conceptual block diagram of an example system configured to determine whether a vehicle is active on a runway, in accordance with some examples of this disclosure.
FIG. 3 is a conceptual block diagram of an example collision awareness system including a controller-pilot data link communications processing unit, in accordance with some examples of this disclosure.
FIG. 4 is a conceptual block diagram showing the interaction between an example surface indications and alert system and an example cockpit display of traffic information.
FIG. 5 is a flowchart illustrating example process for determining the runway that a vehicle is active on, in accordance with some examples of this disclosure.

### DETAILED DESCRIPTION

Various examples of systems, devices, and techniques are described below for determining whether a vehicle is active on a runway, taxiway, or roadway using a clearance received by the vehicle from a traffic control system. The vehicle may be configured to receive aperiodic clearances, such as controller-pilot data link communications (CPDLC) data messages, via a flight management system (FMS) or a communications management unit (CMU). The vehicle may include a surface indications and alerts (SURF-IA) system that receives the clearance after the operator or crewmembers of the vehicle approve or activate the clearance. The operator or crewmember can approve the clearance by downlinking a message indicating that the vehicle will comply (e.g., a "wilco" message).

After the operator or crewmember has approved the message, a system of this disclosure (e.g., a SURF-IA system) may be configured to analyze the clearance to determine on which runway the vehicle is or will be active. For example, if the traffic control system sends a clearance instructing the vehicle to approach a runway and the operator approves the clearance, the system may be configured to determine that the vehicle is active on the runway. If the operator cancels, rejects, or is unable to understand or comply with the clearance, the system may be configured to disregard the clearance or to determine the vehicle is not active on the runway indicated in the clearance.

Although the techniques of this disclosure can be used for any type of vehicle, the techniques of this disclosure may be especially useful for airports for monitoring aircraft that are approaching runways, performing landings on runways, taking off from runways, and operating on taxiways. In addition, although the techniques are described for determining on which runway a vehicle is active, the techniques may also be useful for determining on which taxiway, at which gate, or on which roadway a vehicle is active.

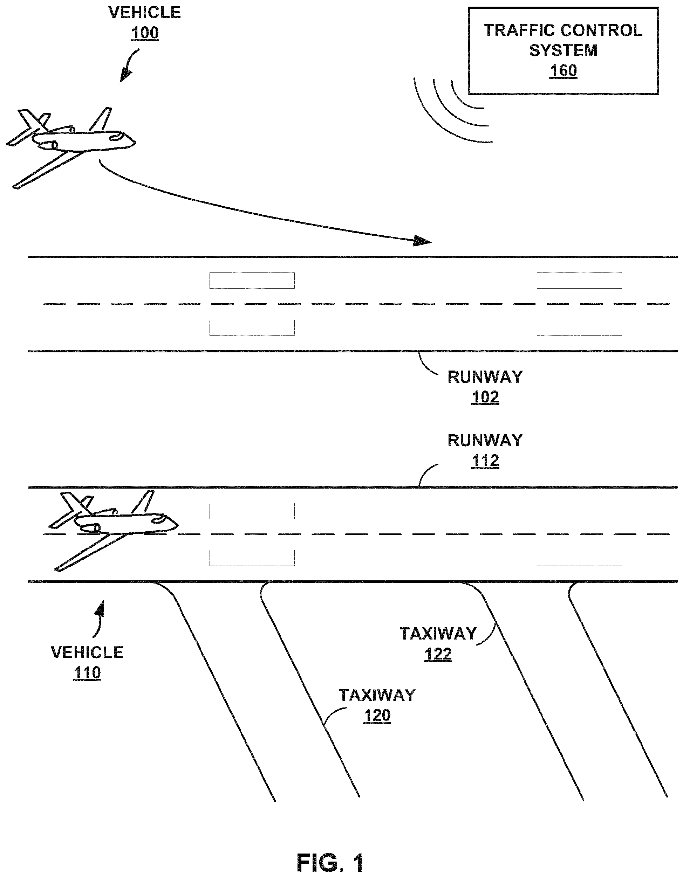

FIG. 1 is a conceptual block diagram of vehicles 100 and 110 that are active on two runways 102 and 112, in accordance with some examples of this disclosure. Runways 102 and 112 are located in an aerodrome (e.g., an airport, airfield, or military base) that also includes taxiways 120 and 122 and traffic control system 160. A system of this disclosure (e.g., system 202) can be integrated within vehicle 100, vehicle 110, or traffic control system 160. However, in some examples, a system of this disclosure may be separate from vehicles 100 and 110 and traffic control system 160. The system may be integrated with another system in the aerodrome or may be a stand-alone system.

Traffic control system 160 is configured to issue clearances instructing vehicles 100 and 110 how to operate in a specific region (e.g., in the aerodrome). Traffic control system 160 may include a system managed by an air traffic controller, an Advanced Surface Movement Guidance and Control System (A-SMGCS), an autonomous vehicle control center, or any other system for controlling the movements of vehicles. In the example of a system managed by an air traffic controller, traffic control system 160 can monitor and command the movements of vehicles 100 and 110 on and around runways 102 and 112, taxiways 120 and 122, intersections, apron parking bays, gates, hangars, and other areas in the aerodrome.

The techniques of this disclosure may also be applied outside of an aerodrome. For example, a system may be configured to determine on which roadway a vehicle is active based on a clearance received by the vehicle from a traffic control system. In the context of land vehicles, the traffic control system may include an autonomous vehicle management system. As another example, a system may be configured to determine in which sea lane a vehicle is active based on a clearance received by the vehicle from a traffic control system.

Although FIG. 1 depicts vehicles 100 and 110 as airplanes, vehicles 100 and 110 may be any mobile objects or remote objects. In some examples, vehicles 100 and/or 110 may be an aircraft such as an airplane, a helicopter, or a weather balloon, or vehicles 100 and/or 110 may be a space vehicle such as a satellite or spaceship. In yet other examples, vehicles 100 and/or 110 may include a land vehicle such as an automobile or a water vehicle such as a ship or a submarine. Vehicles 100 and/or 110 may be a manned vehicle or an unmanned vehicle, such as a drone, a remote-control vehicle, or any suitable vehicle without any pilot or crew on board.

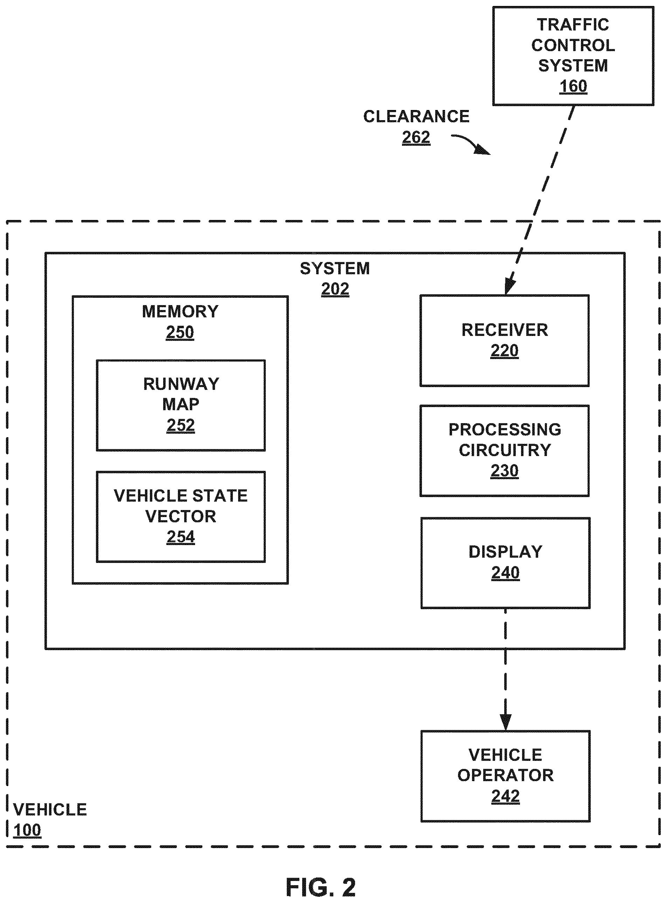

FIG. 2 is a conceptual block diagram of an example system 202 configured to determine whether vehicle 100 is active on runway 102, in accordance with some examples of this disclosure. System 202 is shown integrated with vehicle 100, but system 202 may also be integrated with any other vehicle or system, such as vehicle 110 or traffic control system 160. System 202 includes receiver 220, processing circuitry 230, display 240, and memory 250, but system 202 can also include other components such as a positioning system (e.g., a Global Navigation Satellite System (GNSS)) and/or an inertial navigation system (INS).

Receiver 220 is configured to receive clearance 262 from traffic control system 160. Receiver 220 may be configured to receive clearance 262 as digital data and/or audio data from traffic control system 160. For example, traffic control system 160 can transmit clearance 262 over controller-pilot data link communications (CPDLC) or another data link such as Command and Control (C2) for unmanned aerial systems. Processing circuitry 230 may be configured to analyze or process clearance 262 to determine if traffic control system 160 has instructed vehicle 100 to approach/land or take off from a particular runway. In examples in which clearance 262 includes voice data, processing circuitry 230 may be configured to create a transcript of clearance 262 using voice recognition techniques. Additionally or alternatively, traffic control system 160 can create the transcript of clearance 262 and transmit the transcript to receiver 220.

In some examples, receiver 220 or another receiver on vehicle 100 can receive GNSS data and other state/status vector data (e.g., destination, heading, and velocity) from vehicles 100 and 110. System 202 may also include an INS for sensing the orientation of vehicle 100. Receiver 220 and/or another receiver on vehicle 100 may be configured to receive traffic from other vehicles and other sources.

Processing circuitry 230 may include any suitable arrangement of hardware, software, firmware, or any combination thereof, to perform the techniques attributed to processing circuitry 230 herein. Examples of processing circuitry 230 include any one or more microprocessors, digital signal processors (DSPs), application specific integrated circuits (ASICs), field programmable gate arrays (FPGAs), or any other equivalent integrated or discrete logic circuitry, as well as any combinations of such components. When processing circuitry 230 includes software or firmware, processing circuitry 230 further includes any necessary hardware for storing and executing the software or firmware, such as one or more processors or processing units.

In general, a processing unit may include one or more microprocessors, DSPs, ASICs, FPGAs, or any other equivalent integrated or discrete logic circuitry, as well as any combinations of such components. processing circuitry 230 may include memory 250 configured to store data. Memory 250 may include any volatile or non-volatile media, such as a random access memory (RAM), read only memory (ROM), non-volatile RAM (NVRAM), electrically erasable programmable ROM (EEPROM), flash memory, and the like. In some examples, memory 250 may be external to processing circuitry 230 (e.g., may be external to a package in which processing circuitry 230 is housed).

Display 240 may be configured to present a graphical user interface to vehicle operator 242 and/or crewmember. Display 240 may be mounted in a cockpit or on a dashboard of vehicle 200. Additionally or alternatively, display 240 may be mounted in another vehicle, so that display 240 can present to the operator of the other vehicle an indication of whether a vehicle is active on runway 102 or 112. For example, processing circuitry 230 may be configured to present, via display 240, the relative positions of vehicles 100 and 110, runways 102 and 112, taxiways 120 and 122 as graphical icons on a graphical user interface. Processing circuitry 230 may be further configured to present information regarding which runway(s) vehicles 100 and/or 110 are active on. Processing circuitry 230 may be configured to also present an indication that two vehicles are active on the same runway or in response to determining that clearance 262 and vehicle state vector 254 indicate that vehicle 100 is active on different runways.

Display 240 may include a monitor, cathode ray tube display, a flat panel display such as a liquid crystal (LCD) display, a plasma display, a light emitting diode (LED) display, and/or any other suitable display. Display 240 may be part of a personal digital assistant, mobile phone, tablet computer, laptop computer, any other suitable computing device, or any combination thereof, with a built-in display or a separate display. Display 240 may also include means for projecting audio to a user, such as speaker(s). Processing circuitry 230 may be configured to present, via display 240, a visual, audible, tactile, or somatosensory notification (e.g., an alarm signal) indicative of a runway incursion or a runway conflict. In some examples where display 240 is not part of system 202, processing circuitry 230 may be configured to present a graphical user interface via a display outside of system 202.

Memory 250 is configured to store runway map 252 and vehicle state vector 254. Runway map 252 may include data indicating the locations of runways 102 and 112, as well as any other runways in the aerodrome. Runway map 252 may also include data indicating the locations of taxiways 120 and 122 and any other structures in the aerodrome, such as aprons, gates, terminals, buildings, poles, and signs. Runway map 252 may include the coordinates (e.g., latitude, longitude, altitude, width, length, heading, and/or elevation) of the centerlines, ends, and/or outer boundaries of runways 102 and 112. Runway map 252 may be part of a terrain awareness warning system (TAWS) such as a ground proximity warning system (GPWS) or an enhanced ground proximity warning system (EGPWS). For example, runway map 252 may be part of a runway database from TAWS. TAWS can include a centralized database (e.g., at an aerodrome and/or within traffic control system 160) that includes data indicating the locations of runways, taxiways, gates, aprons, buildings, and other structures at aerodrome, along with terrain data, weather data, and/or data about non-stationary objects. The centralized database for TAWS may be updated periodically from data sources such as radar, cameras, surveillance messages, and the like. Each of vehicles 100 and 110 may also include a vehicle-based TAWS database that receives updates from the centralized database.

Clearance 262 can include commands, directions, authorizations, or instructions from traffic control system 160 to vehicle 100 on how vehicle 100 should proceed. Traffic control system 160 can communicate clearance 262 to vehicle 100 to command vehicle 100 where or how to proceed. Through clearance 262, traffic control system 160 can set a destination, future position(s), travel path, maneuver, and/or speed for vehicle 100, command vehicle 100 to remain at a current position, command vehicle 100 to proceed through an intersection, or command vehicle 100 to travel to another position, stop, and wait for a future command. Using clearance 262, traffic control system 160 may be configured to clear vehicle 100 to takeoff from runway 102 or 112 or approach/land on runway 102 or 112. Traffic control system 160 can transmit clearance 262 to vehicle 100 as audio data, text data, digitally encoded data, a signal, a data packet, and/or analog encoded data.

Processing circuitry 230 may be configured to determine vehicle state vector 254, which may include a location, velocity, track angle, vertical and/or horizontal speed and/or acceleration of vehicle 100. Processing circuitry 230 can use data from a GNSS and/or an INS to determine the location and velocity of vehicle 100. Processing circuitry 230 can determine the location of vehicle 100 in terms of latitude, longitude, or altitude based on GNSS data or a previously determined location and velocity of vehicle 100. To determine the velocity vector of vehicle 100, processing circuitry 230 can determine the speed, velocity, bearing, and course of vehicle 100 using, for example, satellite navigation, gyroscopic instruments, a compass, flight plan data, and/or any other suitable equipment. Processing circuitry 230 may be configured to determine the course of vehicle 100 using the trajectory of vehicle 100 along with the flight plan and destination of vehicle 100. The velocity vector of vehicle 100 includes an estimated speed and an estimated direction of travel of vehicle 100.

Processing circuitry 230 can determine that vehicle 100 is active on runway 102 or 112 based on runway map 252 and vehicle state vector 254. Runway 102 may be referred to as a "position referenced runway" because the determination is based on vehicle state vector 254. For example, if vehicle state vector 254 indicates that vehicle 100 is located within the boundaries of runway 102, processing circuitry 230 can determine that vehicle 100 is active on runway 102. As depicted in FIG. 1, if vehicle state vector 254 indicates that vehicle 100 is located along the centerline of runway 102 but past the end of runway 102, and the altitude of vehicle 100 is descending at a rate that intersects with runway 102, processing circuitry 230 can determine that vehicle 100 is active on runway 102 (e.g., approaching runway 102 from the air and/or preparing to land).

Additionally or alternatively, processing circuitry 230 may be configured to use a defined area surrounding runway 102 to determine whether vehicle 100 is active on runway 102. The defined area may be bounded by upper and lower limits along the runway distance (e.g., lines perpendicular to the runway centerline) and high and low limits of crossing runway distance (e.g., lines parallel to the runway centerline). Processing circuitry 230 can determine that vehicle 100 is active on runway 102 by determining that the location of vehicle 100 is inside of the upper and lower limits along the runway distance and inside of high and low limits of crossing runway distance.

Moreover, processing circuitry 230 may be configured to determine whether vehicle 100 is active on runway 102 or 112 based on clearance 262. The runway determined using clearance 262 may be referred to as a "clearance designated runway." For example, clearance 262 may include an instruction for vehicle 100 to travel to, take off from, approach, and/or land on runway 102 or 112. However, the runway determinations based on runway map 252, vehicle state vector 254, and clearance 262 may not match.

For example, both of runways 102 and 112 may meet the criteria for determining that vehicle 100 is active, especially if runways 102 and 112 are parallel. For example, if vehicle 100 is located within a threshold window of both of runways 102 and 112, processing circuitry 230 may determine that vehicle 100 is active on both of runways 102 and 112. The threshold window for runway 102 may extend past an end of runway 102 and fan out at a predetermined angle. Thus, two adjacent, parallel runways may have overlapping threshold windows, which can result in a determination that vehicle 100 is active on more than one runway. In addition, if runway map 252 or vehicle state vector 254 is not accurate, the resulting runway determination may be incorrect. An incorrect runway determination could lead to a runway incursion or an incorrect collision prediction.

In accordance with the techniques of this disclosure, processing circuitry 230 may be configured to confirm whether the runway determination based on runway map 252 and vehicle state vector 254 matches the runway determination based on clearance 262. In response to determining that the runway determinations match (e.g., both data sources indicate that vehicle 100 is active on runway 102), processing circuitry 230 can present an indication that vehicle 100 is active on runway 102 via display 240.

In response to determining that the runway determinations do not match, processing circuitry 230 may be configured to present the runway determination based on clearance 262 via display 240. Processing circuitry 230 may also be configured to present, via display 240 to operator 242, an alert or other indication that the runway determinations do not match. Processing circuitry 230 may be configured to transmit an alert to an external system, such as traffic control system 160, indicating the contradictory runway determinations. In some examples, processing circuitry 230 is also configured to output both runway determinations via display 240 to make the crew of vehicle 100 aware of the multiple runway determinations.

By cross-checking the runway determinations, processing circuitry 230 can identify contradictory runway determinations and take immediate action. Processing circuitry 230 can access a potentially more accurate data source (e.g., clearance 262) for determining on which runway vehicle 100 is active, resulting in more accurate runway determinations. Thus, processing circuitry 230 can use clearance 262 to supplement or correct the runway determination based on runway map 252 and vehicle state vector 254.

Processing circuitry 230 may be configured to also use the cross-checking functionality to make taxiway determinations based on runway map 252, vehicle state vector 254, and clearance 262. For example, processing circuitry 230 may determine whether vehicle 100 is active on taxiway 120 or 122 based on runway map 252 and vehicle state vector 254. Processing circuitry 230 may also determine whether vehicle 100 is active on taxiway 120 or 122 based on clearance 262. In response to determining that the taxiway determinations match, processing circuitry 230 can present an indication of the matched taxiway determination. In response to determining that the taxiway determinations do not match, processing circuitry 230 can present an indication of the taxiway determination based on clearance 262.

Processing circuitry 230 may be configured to present an alert to vehicle operator 242 via display 240 and/or another user interface in response to determining that vehicles 100 and 110 are active on the same runway. Processing circuitry 230 may be configured to present an alert in response to determining that the runway determinations based on vehicle state vector 254 and clearance 262 do not match. Processing circuitry 230 may be configured to also present an alert in response to determining that there is a runway incursion on runway 102 when vehicle 100 is active on runway 102. Processing circuitry 230 can also output the alert to a system outside of system 202. The alert can be an audio alert, a visual alert, a text alert, an auto-brake alert, and/or any other type of alert. The alert can have multiple severity levels such as advisory, caution, and warning.

Although processing circuitry 230 is described as determining whether vehicle 100 is active on runway 102 or 112, it is also contemplated that processing circuitry 230 may be configured to determine whether another vehicle (e.g., vehicle 110) is active on runway 102 or 112. For example, processing circuitry 230 may be configured to determine whether another vehicle is active on a runway based on a vehicle state vector for the other vehicle, where processing circuitry 230 may have determined the vehicle state vector data for the other vehicle based on a surveillance message received from the other vehicle. Processing circuitry 230 may also be configured to determine the other vehicle is active on a runway based on a clearance for the other vehicle.

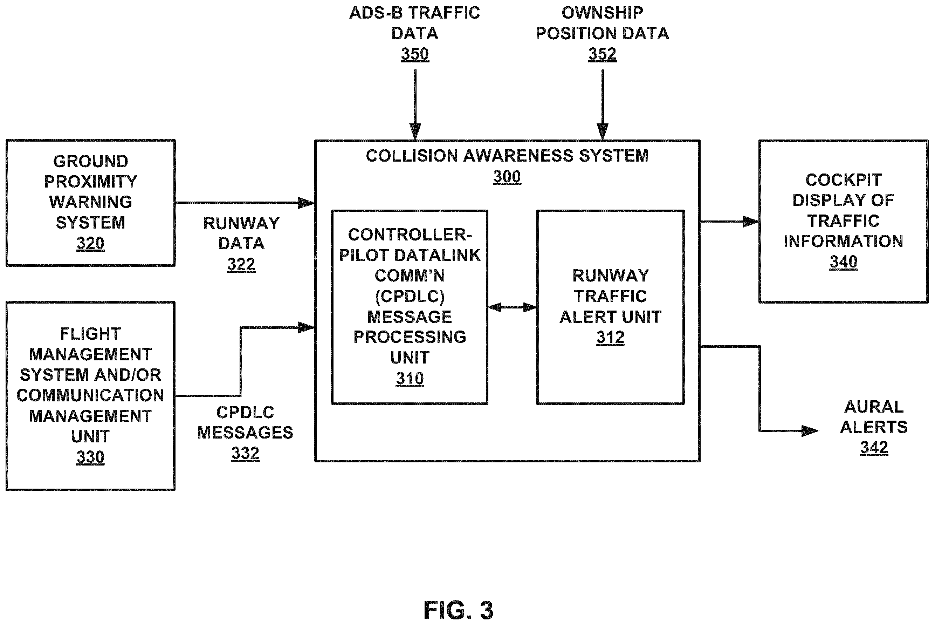

FIG. 3 is a conceptual block diagram of an example collision awareness system 300 including a controller-pilot data link communications processing unit 310, in accordance with some examples of this disclosure. Collision awareness system 300 may be configured to receive inputs from GPWS 320 and FMS and/or CMU 330, along with ADS-B traffic data 350 and ownship position data 352. Collision awareness system 300 may be configured to output data to CDTI 340 and as aural alerts 342. CDTI 340 may be configured to present an airport moving map to the operator and/or crew of the vehicle. The airport moving map may include a map of the runways, taxiways, gates, terminals, aprons, and/or obstructions at the airport.

GPWS 320 can include a map of runways as part of a map of an aerodrome. GPWS 320 can provide runway data 322 to collision awareness system 300, where runway data 322 includes the location, orientation, length, width, and elevation of each runway. Runway data 322 is an example of runway map 252 shown in FIG. 2.

CPDLC messages 332 are an example of clearances sent by a traffic control system to a vehicle. FMS and/or CMU 330 can receive and present CPDLC messages 332 to the operator and crewmembers of the vehicle. FMS and/or CMU 330 may be configured to present CPDLC messages 332 via cockpit display of traffic information (CDTI) 340. FMS and/or CMU 330 can provide CPDLC messages 332 to collision awareness system 300, which may include a traffic collision avoidance system (TCAS) and/or a SURF-IA. In some examples, FMS and/or CMU 330 may be configured to provide only a single message to collision awareness system 300.

Collision awareness system 300 may also receive ownship position data 352 and surveillance data such as ADS-B traffic data 350. ADS-B traffic data 350 is an example of cooperative position, velocity, and heading data received from other vehicles. Collision awareness system 300 can receive ADS-B traffic data 350 from an ADS-B receiver or any other surveillance receiver. Ownship position data 352 can include position, orientation, velocity, and other data about the ownship vehicle. Collision awareness system 300 can receive ownship position data 352 from a transponder, a FMS, a GNSS, and/or an INS.

Collision awareness system 300 can use CPDLC message processing unit 310 to determine a runway on which the ownship vehicle is active based on CPDLC messages 332. In some examples, collision awareness system 300 may be configured to determine that the ownship vehicle is not active on any of the runways in the aerodrome based on CPDLC messages 332. For example, if one of CPDLC messages 332 instructs the ownship vehicle to maintain a holding pattern in advance of approaching or landing, collision awareness system 300 may determine that the ownship vehicle is not active on any of the runways in the aerodrome.

Collision awareness system 300 may be configured to determine which runway a vehicle is active on using CPDLC messages 332, which can include responses (e.g., approvals and rejections) by the vehicle operator or crew to the traffic control system. For example, the operator or crewmember may be able to approve or decline an instruction sent by the traffic control system. The approval or rejection by the operator or crewmember may be sent back to the traffic control system. Collision awareness system 300 may be configured to confirm a runway determination that was made based on a clearance in response to determining that the operator or crewmember approved the instruction in the clearance. Collision awareness system 300 may be configured to refrain from determining that the vehicle is active on a first runway in response to determining that the operator or crewmember declined a clearance that included an instruction to travel to the first runway.

In some examples, a traffic control system may be configured to automatically send a clearance to a vehicle without any user input from a human controller. The vehicle crew can respond to the clearance with a standby message, a will-comply message, a roger message, an affirm message, an unable message, a negative message, and/or any other message. A standby message can indicate that the clearance will remain open until the vehicle transmits a wilco message or an unable message. A wilco message indicates that the vehicle can and will comply with the clearance. A roger message indicates that the vehicle crew understands the clearance. An affirm message indicates that the crew has positively responded to a clearance requesting an affirm/negative response. An unable message indicates that the crew cannot comply with the clearance or that the crew does not understand the clearance. A negative message indicates that the crew cannot positively respond to the clearance requesting an affirm/negative response.

FMS and/or CMU 330 can provide one of CPDLC messages 332 to collision awareness system 300 after the crew activates the CPDLC message with a cleared runway into the FMS and/or CMU 330 and downlinks a response to the traffic control system. CPDLC message processing unit 310 can provide the input CPDLC message relative to a runway or a taxiway including the responsive message between the flight crew and ATC to runway traffic alert unit 312. CPDLC message processing unit 310 can send the cleared runway or taxiway data to runway traffic alert unit 312 when the procedure is cleared by the flight crew. Runway traffic alert unit 312 may be configured to implement one or more algorithms to make a runway determination based on a clearance only when the runway is cleared and still in a clear state (e.g., not canceled). Runway traffic alert unit 312 may be further configured to only cross-check a runway determination based on a clearance for a runway that is cleared and still in a clear state.

CPDLC message processing unit 310 may be configured to distinguish between active messages, messages canceled by the traffic control system, and messages resumed by the traffic control system. CPDLC message processing unit 310 may be configured to send the canceled cleared data to runway traffic alert unit 312 indicating the cleared runway is canceled when the procedure is canceled. CPDLC message processing unit 310 can send the resumed cleared data to runway traffic alert unit 312 indicating the cleared runway when the procedure is resumed.

As an example, a traffic control system can transmit a tailored arrival (TA) message to a vehicle that is preparing to approach and/or land at an aerodrome. If a continuation of the TA profile is acceptable to the traffic control system, the traffic control system can clear the vehicle for the approach by stating, "[call sign] AFTER MENLO CLEARED ILS RW28L APPROACH." If all conditions are acceptable to the vehicle crew, the vehicle crew should execute the cleared FMS-directed profile and apply standard approach and landing procedures. At any time, the traffic control system may issue alternative level, altitude, routing, or vectors and discontinue the TA to best suit traffic conditions. When the traffic control system discontinues the TA, the traffic control system should provide instructions including an assigned level or altitude to the vehicle crew. The control system may clear the aircraft back onto the TA by stating, "[call sign] CLEARED DIRECT [Waypoint on TA]. RESUME THE [TA designator] TAILORED ARRIVAL."

CDTI 340 is configured to present vehicle and object traffic around runways, taxiways, and/or roadways to inform the operator and/or crew of the ownship vehicle. Collision awareness system 300 may be configured to present, via CDTI 340, an indication that the vehicle is not active on any runway in response to determining that the vehicle is active on a first runway based on runway data 322 and ownship position data 352 and determining that the vehicle is not active on any runway based on CPDLC messages 332. Collision awareness system 300 may be configured to present, via CDTI 340, an indication that the vehicle is active on the first runway in response to determining that the vehicle is not active on any runway based on runway data 322 and ownship position data 352 and determining that the vehicle is active on a first runway based on CPDLC messages 332.

Collision awareness system 300 can use runway traffic alert unit 312 to determine if a vehicle is within a threshold distance or envelope of approaching a particular runway based on runway data 322, ADS-B traffic data 350, and/or ownship position data 352. For example, even if the vehicle has been cleared to approach a first runway for landing, collision awareness system 300 may determine that the vehicle is approaching a second, different runway, especially if the second runway is parallel to the first runway. Thus, cross-checking the runway determination from runway traffic alert unit 312 with the runway determination from CPDLC message processing unit 310 may increase the accuracy of aural alerts 342 and the information presented via CDTI 340.

In response to determining that the runway determinations do not match, collision awareness system 300 can generate aural alerts 342 and/or a visual alert via CDTI 340 to inform a vehicle operator that the runway determinations do not match. Collision awareness system 300 may be configured to also generate aural alerts 342 and/or a visual alert via CDTI 340 in response to determining that the vehicle is active on a runway that is blocked or obstructed.

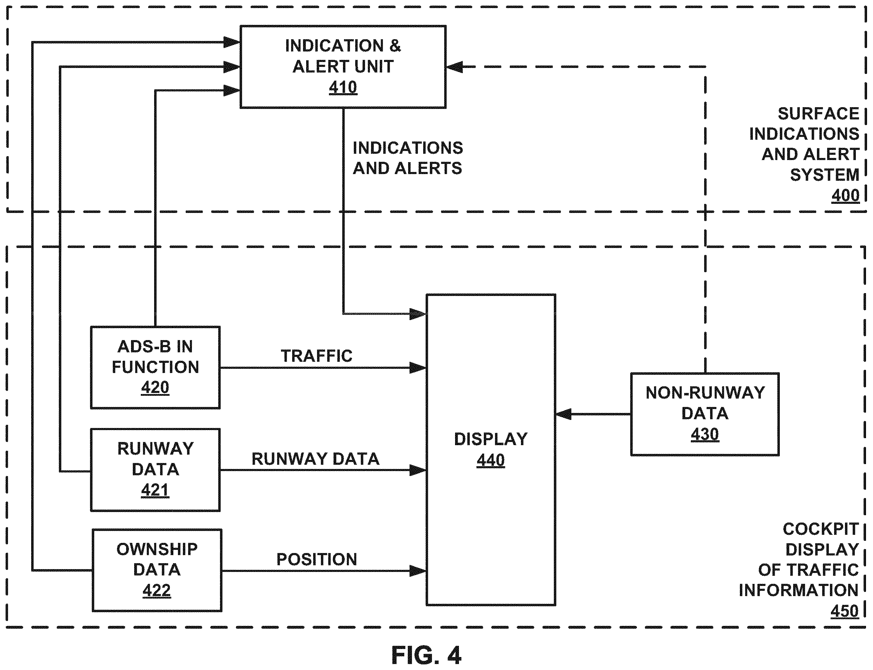

FIG. 4 is a conceptual block diagram showing the interaction between an example surface indications and alert system 400 and an example cockpit display of traffic information 450. SURF-IA system 400 includes indication and alert unit 410, which receives input data such as ADS-B unit 420, runway data 421, ownship data 422, and, in some examples, non-runway data 430. CDTI 450 includes display 440, which is configured to present data such as ADS-B data, runway data 421, ownship data 422, and non-runway data 430, as well as indication and alerts from SURF-IA system 400. Non-runway 430 may include the locations and dimensions of obstacles such as buildings, poles, signs, taxiways, and other structures and obstacles in the aerodrome.

SURF-IA system 400 may be hosted or run on collision awareness system 300 shown in FIG. 3. Although labeled as only a SURF-IA system, SURF-IA system 400 may include a taxiway indications and alerts system with the capability of predicting taxiway conflicts and potential collisions. Indication and alert unit 410 may have functionality similar to runway traffic alert unit 312.

As part of the algorithm(s) implemented by indication and alert system 410, SURF-IA system 400 may be configured to make a first runway determination for a vehicle based on data 420-422 and 430. SURF-IA system 400 may be configured to make a second runway determination for the vehicle based on a clearance (not shown in FIG. 4) received by the vehicle from a traffic clearance. SURF-IA system 400 may be configured to then cross-check the two runway determinations and present the runway determinations. If the runway determinations do not match, then SURF-IA system 400 may be configured to present an alert via display 440. SURF-IA 400 can also use data 420-422 to determine whether the active runway is obstructed or blocked. For example, SURF-IA system 400 may be configured to determine whether there is an incursion or an obstruction by another vehicle or by an object on an active runway.

SURF-IA system 400 may be configured to run an algorithm that can trigger indication and alert unit 410 in response to determining that a target vehicle is within the threshold of algorithm. The indications and alert unit 410 can be used by SURF-IA system 400 to detect that there is a potential collision between two vehicles on runway or taxiway.

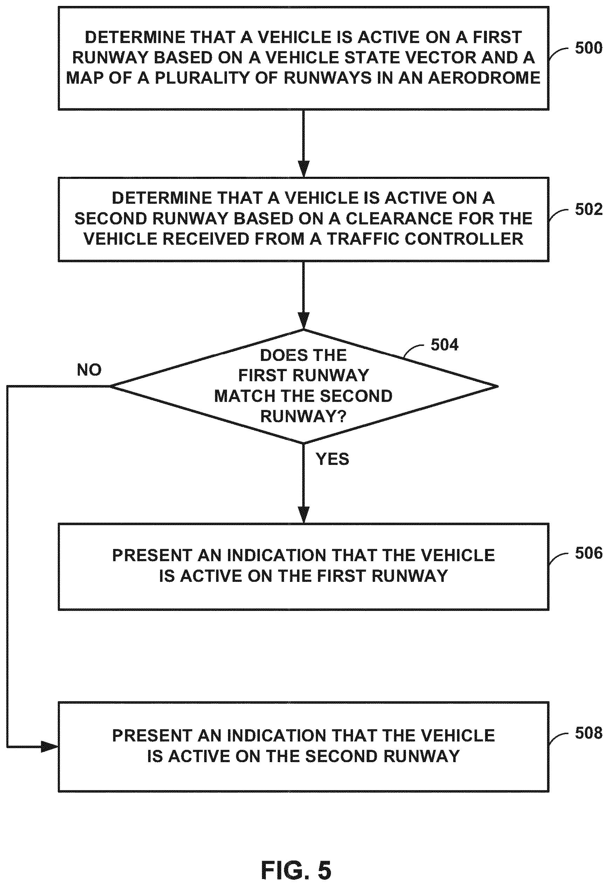

FIG. 5 is a flowchart illustrating example processes for determining the runway that a vehicle is active on, in accordance with some examples of this disclosure. The example process of FIG. 5 are described with reference to vehicle 100 and processing circuitry 230 shown in FIGS. 1 and 2, although other components may exemplify similar techniques. For example, collision awareness system 300 and SURF-IA system 400 may be configured to perform the example process of FIG. 5. Processing circuitry 230 can perform the example process of FIG. 5 once, or processing circuitry 230 can perform the example process periodically, repeatedly, or continually.

In the example of FIG. 5, processing circuitry 230 determines that vehicle 100 is active on runway 102 or 112 based on vehicle state vector 254 and runway map 252 (500). Processing circuitry 230 may be configured to determine vehicle state vector 254 based on data from GNSS, ADS-B, INS, and/or any other data sources. Vehicle state vector 254 may indicate a current or recent location and velocity of vehicle 100. The velocity vector for vehicle 100 may include a speed and a direction of travel in three dimensions (e.g., latitude, longitude, and altitude). Runway map 252 includes indications of the locations, orientations, elevations, lengths, and/or widths of runways 102 and 112. Vehicle state vector 254 and runway map 252 may indicate that vehicle 100 is approaching, landing on, taking off from, or taxiing to or along runway 102 or 112.

In the example of FIG. 5, processing circuitry 230 determines that vehicle 100 is active on runway 102 or 112 based on clearance 262 for vehicle 100 received from traffic control system 160 (502). Clearance 262 may include a data message with an instruction for vehicle 100 to approach, land on, take off from, travel to, or travel across runway 102 or 112. The operator or crew of vehicle 100 may respond to clearance 262 by approval or rejecting clearance 262. Processing circuitry 230 can determine that vehicle is active on runway 102 or 112 based on clearance 262 and/or the response to clearance 262 by processing the data in clearance 262 and the response. In examples in which clearance 262 includes voice data, processing circuitry 230 may be configured to use voice-recognition software to determine whether vehicle 100 is active on runway 102 or 112.

In the example of FIG. 5, processing circuitry 230 determines whether the first runway determination matches the second runway determination (504). Processing circuitry 230 can determine whether the runway determinations match by comparing the runway determinations to determine, for example, whether the runway numbers or names are identical. In response to determining that the runway determinations match (the "YES" branch of block 504), processing circuitry 230 presents an indication that vehicle 100 is active on the determined runway (506). In response to determining that the runway determinations match (the "NO" branch of block 504), processing circuitry 230 presents an indication that vehicle 100 is active on the runway determined using clearance 262 (508). The runway determined using clearance 262 may be less likely to have the ambiguities that can exist with a runway determination based on vehicle state vector 254 and runway map 252. For example, the location and heading of vehicle 100 may be within a threshold window of both of runways 102 and 112, especially if runways 102 and 112 are parallel.

This disclosure describes techniques for presenting an indication that a vehicle is active on a runway, but the same techniques can be used to present an indication that a vehicle is active on a taxiway or a roadway. For example, processing circuitry 230 can determine that vehicle 100 is active on a first taxiway or roadway based on a state vector for vehicle 100 and a map of taxiways and/or roadways. Processing circuitry 230 can also determine that vehicle 100 is active on a second taxiway or roadway based on clearance 262. Responsive to determining that the first taxiway or roadway matches the second taxiway or roadway, processing circuitry 230 can present via display 240 an indication that vehicle 100 is active on the determined taxiway or roadway. Responsive to determining that the first taxiway or roadway does not match the second taxiway or roadway, processing circuitry 230 can present via display 240 an indication that vehicle 100 is active on the second taxiway or roadway.

The disclosure contemplates computer-readable storage media including instructions to cause a processor to perform any of the functions and techniques described herein. The computer-readable storage media may take the example form of any volatile, non-volatile, magnetic, optical, or electrical media, such as a random access memory (RAM), read-only memory (ROM), non-volatile RAM (NVRAM), electrically erasable programmable ROM (EEPROM), or flash memory. The computer-readable storage media may be referred to as non-transitory. A computing device may also contain a more portable removable memory type to enable easy data transfer or offline data analysis.

The techniques described in this disclosure, including those attributed to vehicles 100 and 110, traffic control system 160, systems, units, and applications 202, 310, and 320, receiver 220, processing circuitry 230, displays 240 and 440, memory 250, collision awareness system 300, and/or CDTIs 340 and 450 and various constituent components, may be implemented, at least in part, in hardware, software, firmware or any combination thereof. For example, various aspects of the techniques may be implemented within one or more processors, including one or more microprocessors, digital signal processors (DSPs), application-specific integrated circuits (ASICs), field-programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry.

As used herein, the term "circuitry" refers to an ASIC, an electronic circuit, a processor (shared, dedicated, or group) and memory that execute one or more software or firmware programs, a combinational logic circuit, or other suitable components that provide the described functionality. The term "processing circuitry" refers one or more processors distributed across one or more devices. For example, "processing circuitry" can include a single processor or multiple processors on a device. "Processing circuitry" can also include processors on multiple devices, wherein the operations described herein may be distributed across the processors and devices.

Such hardware, software, firmware may be implemented within the same device or within separate devices to support the various operations and functions described in this disclosure. For example, any of the techniques or processes described herein may be performed within one device or at least partially distributed amongst two or more devices, such as between vehicles 100 and 110, traffic control system 160, systems, units, and applications 202, 310, and 320, receiver 220, processing circuitry 230, displays 240 and 440, memory 250, collision awareness system 300, and/or CDTIs 340 and 450. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors.

In some examples, a computer-readable storage medium includes non-transitory medium. The term "non-transitory" may indicate that the storage medium is not embodied in a carrier wave or a propagated signal. In certain examples, a non-transitory storage medium may store data that can, over time, change (e.g., in RAM or cache). Elements of devices and circuitry described herein, including, but not limited to, vehicles 100 and 110, traffic control system 160, systems, units, and applications 202, 310, and 320, receiver 220, processing circuitry 230, displays 240 and 440, memory 250, collision awareness system 300, and/or CDTIs 340 and 450 may be programmed with various forms of software. The one or more processors may be implemented at least in part as, or include, one or more executable applications, application modules, libraries, classes, methods, objects, routines, subroutines, firmware, and/or embedded code, for example.

Various examples of the disclosure have been described. Any combination of the described systems, operations, or functions is contemplated. These and other examples are within the scope of the following claims.

## Claims

1. A system (202) comprising:
a memory (250) configured to store a database comprising a map of a plurality of runways (102, 112) in an aerodrome;
a receiver (220) configured to receive a clearance (262) for a vehicle (100, 110, 200) from a traffic control system (160); and
processing circuitry (230) configured to:
determine that the vehicle is active on a first runway of the plurality of runways (102, 112) based on a state vector for the vehicle and based on the map of the plurality of runways;
determine that the vehicle is active on a second runway of the plurality of runways based on the received clearance (262) and a response to the received clearance (262) transmitted from the vehicle (100, 110, 200), by processing the data in clearance and the response;
confirm whether the first runway matches the second runway;
present, via a display (240), an indication that the vehicle is active on the first runway in response to confirming that the first runway matches the second runway; and
determine that the first runway is different than the second runway; and
present, via the display, an indication that the vehicle is active on the second runway in response to:
determining that the first runway is different than the second runway; and
determining that the vehicle is active on the second runway.

2. The system (202) of claim 1, wherein the processing circuitry (230) is configured to present, via the display, an alert in response to determining that the first runway is different than the second runway.

3. The system (202) of claim 1,
wherein the vehicle (100, 110, 200) is a first vehicle,
wherein the clearance (262) is a first clearance,
wherein the state vector is a first state vector,
wherein the receiver (220) is configured to receive a second clearance for a second vehicle from the traffic control system (160), and
wherein the processing circuitry (230) is further configured to:
determine that the second vehicle is active on a first taxiway of a plurality of taxiways (120, 122) based on a second state vector for the second vehicle and based on the map of the plurality of runways (102, 112);
determine that the second vehicle is active on a second taxiway of the plurality of taxiways (120, 122) based on the received second clearance (262);
confirm whether the first taxiway matches the second taxiway; and
present, via the display, an indication that the second vehicle is active on the first taxiway in response to confirming that the first taxiway matches the second taxiway.

4. The system (202) of claim 3, wherein the processing circuitry (230) is further configured to:
determine that the first taxiway is different than the second taxiway; and
present, via the display (240), an indication that the second vehicle is active on the second taxiway in response to determining that the first taxiway is different than the second taxiway.

5. The system (202) of claim 1, wherein the processing circuitry (230) is configured to determine the state vector by determining a position and a velocity vector of the vehicle (100, 110, 200).

6. The system (202) of claim 1, wherein the map of the plurality of runways (102, 112) comprises a terrain avoidance and warning system or a ground proximity warning system.

7. The system (202) of claim 1,
wherein the processing circuitry (230) is configured to determine that the vehicle (100, 110, 200) is active on the first runway by determining that the vehicle is approaching or taking off from the first runway, and
wherein the processing circuitry is configured to determine that the vehicle is active on the second runway by determining that the vehicle is approaching or taking off from the second runway.

8. The system (202) of claim 1,
wherein the display (240) is mounted on the vehicle (100, 110, 200), and
wherein the processing circuitry (230) is configured to present the indication of that the vehicle is active on the first runway to an operator of the vehicle.

9. The system (202) of claim 1,
wherein the vehicle (100, 110, 200) is a first vehicle,
wherein the display (240) is mounted on another vehicle, and
wherein the processing circuitry (230) is configured to present the indication that the first vehicle is active on the first runway to an operator of the other vehicle.

10. The system (202) of claim 1, wherein the processing circuitry (230) is configured to send the first runway to a surface indications and alerts system (400) or a taxiway indications and alerts system as an identified runway in response to confirming that the first runway matches the second runway.

11. A method comprising:
determining, by processing circuitry (230), that a vehicle (100, 110, 200) is active on a first runway of a plurality of runways (102, 112) based on a state vector for the vehicle and a map of the plurality of runways;
receiving a clearance (262) for the vehicle (100, 110, 200) from a traffic control system (160);
receiving a response to the clearance (262) transmitted from the vehicle (100, 110, 200) to the traffic control system (160);determining, by the processing circuitry, that the vehicle is active on a second runway of the plurality of runways based on the clearance (262) and the response;
confirming, by the processing circuitry, that the first runway matches the second runway; and
presenting, by the processing circuitry and via a display (240), an indication that the vehicle is active on the first runway in response to confirming that the first runway matches the second runway; and
presenting, via the display, an indication that the vehicle is active on the second runway in response to:
determining that the first runway is different than the second runway; and determining that the vehicle is active on the second runway.

## Patentansprüche

1. System (202), umfassend:
einen Speicher (250), der dazu konfiguriert ist, eine Datenbank zu speichern, die eine Karte einer Vielzahl von Start- und Landebahnen (102, 112) auf einem Flugplatz umfasst;
einen Empfänger (220), der dazu konfiguriert ist, eine Freigabe (262) für ein Fahrzeug (100, 110, 200) von einem Verkehrssteuerungssystem (160) zu empfangen; und
eine Verarbeitungsschaltung (230), die dazu konfiguriert ist:
zu bestimmen, dass das Fahrzeug auf einer ersten Start- und Landebahn der Vielzahl von Start- und Landebahnen (102, 112) aktiv ist, basierend auf einem Zustandsvektor für das Fahrzeug und basierend auf der Karte der Vielzahl von Start- und Landebahnen;
zu bestimmen, dass das Fahrzeug auf einer zweiten Start- und Landebahn der Vielzahl der Start- und Landebahnen aktiv ist, basierend auf der empfangenen Freigabe (262) und einer Antwort auf die empfangene Freigabe (262), die vom Fahrzeug (100, 110, 200) durch Verarbeiten der Daten in der Freigabe und der Antwort gesendet wurde;
zu bestätigen, ob die erste Start- und Landebahn mit der zweiten Start- und Landebahn übereinstimmt;
über eine Anzeige (240) eine Angabe darzustellen, dass das Fahrzeug auf der ersten Start- und Landebahn aktiv ist, als Antwort auf die Bestätigung, dass die erste Start- und Landebahn mit der zweiten Start- und Landebahn übereinstimmt; und
zu bestimmen, dass die erste Start- und Landebahn anders ist als die zweite Start- und Landebahn; und
über die Anzeige eine Angabe darzustellen, dass das Fahrzeug auf der zweiten Start- und Landebahn aktiv ist, als Antwort auf:
Bestimmen, dass die erste Start- und Landebahn anders ist als die zweite Start- und Landebahn; und
Bestimmen, dass das Fahrzeug auf der zweiten Start- und Landebahn aktiv ist.

2. System (202) nach Anspruch 1, wobei die Verarbeitungsschaltung (230) dazu konfiguriert ist, über die Anzeige eine Warnung als Antwort auf das Bestimmen darzustellen, dass die erste Start- und Landebahn anders ist als die zweite Start- und Landebahn.

3. System (202) nach Anspruch 1,
wobei das Fahrzeug (100, 110, 200) ein erstes Fahrzeug ist,
wobei die Freigabe (262) eine erste Freigabe ist,
wobei der Zustandsvektor ein erster Zustandsvektor ist,
wobei der Empfänger (220) dazu konfiguriert ist, eine zweite Freigabe für ein zweites Fahrzeug vom Verkehrssteuerungssystem (160) zu empfangen, und
wobei die Verarbeitungsschaltung (230) ferner dazu konfiguriert ist:
zu bestimmen, dass das zweite Fahrzeug auf einer ersten Rollbahn einer Vielzahl von Rollbahnen (120, 122) aktiv ist, basierend auf einem zweiten Zustandsvektor für das zweite Fahrzeug und basierend auf der Karte der Vielzahl von Start- und Landebahnen (102, 112);
zu bestimmen, dass das zweite Fahrzeug auf einer zweiten Rollbahn der Vielzahl der Rollbahnen (120, 122) aktiv ist, basierend auf der empfangenen zweiten Freigabe (262);
zu bestätigen, ob die erste Rollbahn mit der zweiten Rollbahn übereinstimmt; und
über die Anzeige eine Angabe darzustellen, dass das zweite Fahrzeug auf der ersten Rollbahn aktiv ist, als Antwort auf die Bestätigung, dass die erste Rollbahn mit der zweiten Rollbahn übereinstimmt.

4. System (202) nach Anspruch 3, wobei die Verarbeitungsschaltung (230) ferner dazu konfiguriert ist:
zu bestimmen, dass die erste Rollbahn anders ist als die zweite Rollbahn; und
über die Anzeige (240) eine Angabe darzustellen, dass das zweite Fahrzeug auf der zweiten Rollbahn aktiv ist, als Antwort auf das Bestimmen, dass die erste Rollbahn anders ist als die zweite Rollbahn.

5. System (202) nach Anspruch 1, wobei die Verarbeitungsschaltung (230) dazu konfiguriert ist, den Zustandsvektor durch Bestimmung einer Position und eines Geschwindigkeitsvektors des Fahrzeugs (100, 110, 200) zu bestimmen.

6. System (202) nach Anspruch 1, wobei die Karte der Vielzahl der Start- und Landebahnen (102, 112) ein System zur Geländevermeidung und -warnung oder ein Bodenannäherungswarnsystem umfasst.

7. System (202) nach Anspruch 1,
wobei die Verarbeitungsschaltung (230) dazu konfiguriert ist, durch Bestimmen, dass sich das Fahrzeug der ersten Start- und Landebahn annähert oder von dieser startet, zu bestimmen, dass das Fahrzeug (100, 110, 200) auf der ersten Start- und Landebahn aktiv ist, und
wobei die Verarbeitungsschaltung dazu konfiguriert ist, durch Bestimmen, dass sich das Fahrzeug der zweiten Start- und Landebahn annähert oder von dieser startet, zu bestimmen, dass das Fahrzeug auf der zweiten Start- und Landebahn aktiv ist.

8. System (202) nach Anspruch 1,
wobei die Anzeige (240) an dem Fahrzeug (100, 110, 200) angebracht ist, und
wobei die Verarbeitungsschaltung (230) dazu konfiguriert ist, für einen Fahrzeugbetreiber die Angabe darzustellen, dass das Fahrzeug auf der ersten Start- und Landebahn aktiv ist.

9. System (202) nach Anspruch 1,
wobei das Fahrzeug (100, 110, 200) ein erstes Fahrzeug ist,
wobei die Anzeige (240) an einem anderen Fahrzeug angebracht ist und
wobei die Verarbeitungsschaltung (230) dazu konfiguriert ist, für einen Fahrzeugbetreiber des anderen Fahrzeugs die Angabe darzustellen, dass das erste Fahrzeug auf der ersten Start- und Landebahn aktiv ist.

10. System (202) nach Anspruch 1, wobei die Verarbeitungsschaltung (230) dazu konfiguriert ist, als Antwort auf die Bestätigung, dass die erste Start- und Landebahn mit der zweiten Start- und Landebahn übereinstimmt, die erste Start- und Landebahn als identifizierte Start- und Landebahn an ein System (400) für Oberflächenangaben und Warnungen oder ein System für Rollbahnangaben und Warnungen zu senden.

11. Verfahren, umfassend:
Bestimmen durch eine Verarbeitungsschaltung (230), dass ein Fahrzeug (100, 110, 200) auf einer ersten Start- und Landebahn einer Vielzahl von Start- und Landebahnen (102, 112) aktiv ist, basierend auf einem Zustandsvektor für das Fahrzeug und einer Karte der Vielzahl von Start- und Landebahnen;
Empfangen einer Freigabe (262) für das Fahrzeug (100, 110, 200) von einem Verkehrssteuerungssystem (160);
Empfangen einer Antwort auf die Freigabe (262), die vom Fahrzeug (100, 110, 200) an das Verkehrssteuerungssystem (160) gesendet wird; Bestimmen durch die Verarbeitungsschaltung, dass das Fahrzeug auf einer zweiten Start- und Landebahn der Vielzahl an Start- und Landebahnen aktiv ist, basierend auf der Freigabe (262) und der Antwort;
Bestätigen durch die Verarbeitungsschaltung, dass die erste Start- und Landebahn mit der zweiten Start- und Landebahn übereinstimmt; und
Darstellen durch die Verarbeitungsschaltung und über eine Anzeige (240) einer Angabe, dass das Fahrzeug auf der ersten Start- und Landebahn aktiv ist, als Antwort auf das Bestätigen, dass die erste Start- und Landebahn mit der zweiten Start- und Landebahn übereinstimmt; und
Darstellen über die Anzeige einer Angabe, dass das Fahrzeug auf der zweiten Start- und Landebahn aktiv ist, als Antwort auf:
das Bestimmen, dass die erste Start- und Landebahn anders ist als die zweite Start- und Landebahn; und
das Bestimmen, dass das Fahrzeug auf der zweiten Start- und Landebahn aktiv ist.

## Revendications

1. Système (202) comprenant :
une mémoire (250) configurée pour stocker une base de données comprenant une carte d'une pluralité de pistes (102, 112) dans un aérodrome ;
un récepteur (220) configuré pour recevoir une autorisation (262) pour un véhicule (100, 110, 200) d'un système de contrôle du trafic (160) ; et
une circuiterie de traitement (230) configurée pour :
déterminer que le véhicule est actif sur une première piste de la pluralité de pistes (102, 112) en fonction d'un vecteur d'état pour le véhicule et en fonction de la carte de la pluralité de pistes ;
déterminer que le véhicule est actif sur une deuxième piste de la pluralité de pistes en fonction de l'autorisation reçue (262) et d'une réponse à l'autorisation reçue (262) transmise par le véhicule (100, 110, 200), en traitant les données dans l'autorisation et la réponse ;
confirmer si la première piste correspond à la deuxième piste ;
présenter, par l'intermédiaire d'un affichage (240), une indication que le véhicule est actif sur la première piste en réponse à la confirmation que la première piste correspond à la deuxième piste ; et
déterminer que la première piste est différente de la deuxième piste ; et
présenter, via l'affichage, une indication que le véhicule est actif sur la deuxième piste en réponse à :
la détermination que la première piste est différente de la deuxième piste ; et
la détermination que le véhicule est actif sur la deuxième piste.

2. Système (202) de la revendication 1, dans lequel la circuiterie de traitement (230) est configurée pour présenter, via l'affichage, une alerte en réponse à la détermination que la première piste est différente de la deuxième piste.

3. Système (202) de la revendication 1,
dans lequel le véhicule (100, 110, 200) est un premier véhicule,
dans lequel l'autorisation (262) est une première autorisation,
dans lequel le vecteur d'état est un premier vecteur d'état,
dans lequel le récepteur (220) est configuré pour recevoir une deuxième autorisation pour un deuxième véhicule du système de contrôle du trafic (160), et
dans lequel la circuiterie de traitement (230) est en outre configurée pour :
déterminer que le deuxième véhicule est actif sur une première voie de circulation d'une pluralité de voies de circulation (120, 122) en fonction d'un deuxième vecteur d'état pour le deuxième véhicule et en fonction de la carte de la pluralité de pistes (102, 112) ;
déterminer que le deuxième véhicule est actif sur une deuxième voie de circulation parmi la pluralité de voies de circulation (120, 122) en fonction de la deuxième autorisation reçue (262) ;
confirmer si la première voie de circulation correspond à la deuxième voie de circulation ; et
présenter, par l'intermédiaire de l'affichage, une indication que le deuxième véhicule est actif sur la première voie de circulation en réponse à la confirmation que la première voie de circulation correspond à la deuxième voie de circulation.

4. Système (202) de la revendication 3, dans lequel la circuiterie de traitement (230) est en outre configurée pour :
déterminer que la première voie de circulation est différente de la deuxième voie de circulation ; et
présenter, par l'intermédiaire de l'affichage (240), une indication que le deuxième véhicule est actif sur la deuxième voie de circulation en réponse à la détermination que la première voie de circulation est différente de la deuxième voie de circulation.

5. Système (202) de la revendication 1, dans lequel la circuiterie de traitement (230) est configurée pour déterminer le vecteur d'état en déterminant une position et un vecteur de vitesse du véhicule (100, 110, 200).

6. Système (202) de la revendication 1, dans lequel la carte de la pluralité de pistes (102, 112) comprend un système d'évitement et d'avertissement du terrain ou un système d'avertissement de proximité du sol.

7. Système (202) de la revendication 1,
dans lequel la circuiterie de traitement (230) est configurée pour déterminer que le véhicule (100, 110, 200) est actif sur la première piste en déterminant que le véhicule s'approche ou décolle de la première piste, et
dans lequel la circuiterie de traitement est configurée pour déterminer que le véhicule est actif sur la deuxième piste en déterminant que le véhicule s'approche ou décolle de la deuxième piste.

8. Système (202) de la revendication 1,
dans lequel l'affichage (240) est monté sur le véhicule (100, 110, 200), et
dans lequel la circuiterie de traitement (230) est configurée pour présenter l'indication que le véhicule est actif sur la première piste à un opérateur du véhicule.

9. Système (202) de la revendication 1,
dans lequel le véhicule (100, 110, 200) est un premier véhicule,
dans lequel l'affichage (240) est monté sur un autre véhicule, et
dans lequel la circuiterie de traitement (230) est configurée pour présenter l'indication que le premier véhicule est actif sur la première piste à un opérateur de l'autre véhicule.

10. Système (202) de la revendication 1, dans lequel la circuiterie de traitement (230) est configurée pour envoyer la première piste à un système d'indications et d'alertes de surface (400) ou à un système d'indications et d'alertes de voie de circulation en tant que piste identifiée en réponse à la confirmation que la première piste correspond à la deuxième piste.

11. Procédé comprenant :
la détermination, par une circuiterie de traitement (230), qu'un véhicule (100, 110, 200) est actif sur une première piste d'une pluralité de pistes (102, 112) en fonction d'un vecteur d'état pour le véhicule et d'une carte de la pluralité de pistes ;
la réception d'une autorisation (262) pour le véhicule (100, 110, 200) d'un système de contrôle du trafic (160) ;
la réception d'une réponse à l'autorisation (262) transmise par le véhicule (100, 110, 200) au système de contrôle du trafic (160) ; la détermination, par la circuiterie de traitement, que le véhicule est actif sur une deuxième piste de la pluralité de pistes en fonction de l'autorisation (262) et de la réponse ;
la confirmation, par la circuiterie de traitement, que la première piste correspond à la deuxième piste ; et
la présentation, par la circuiterie de traitement et par l'intermédiaire d'un affichage (240), d'une indication que le véhicule est actif sur la première piste en réponse à la confirmation que la première piste correspond à la deuxième piste ; et
la présentation, via l'affichage, d'une indication que le véhicule est actif sur la deuxième piste en réponse à:
la détermination que la première piste est différente de la deuxième piste ; et
la détermination que le véhicule est actif sur la deuxième piste.
